# EUROPEAN PATENT APPLICATION

(11) **EP 4 821 340 A1**
(43) Date of publication of application: **14.10.2026**
(21) Application number: 26163036.2
(22) Date of filing: 06.03.2026
(51) Int. Cl.: A01D 34/416

(54) **LINE TRIMMER HEAD FOR BRUSH CUTTERS**

(30) Priority: 24.03.2025 IT 202500005958
(71) Applicant: Active S.r.l., 26037 San Giovanni in Croce (Cremona) (IT)
(72) Inventor: GRIFFINI, Alberto, 26037 SAN GIOVANNI IN CROCE (CR) (IT); BUOLI, Giorgio, SAN GIOVANNI IN CROCE (CR) (IT)
(74) Representative: Robba, Pierpaolo

(57) **Abstract**

The present invention relates to a line trimmer head (1) for brush cutters which allows preventing accidental disengagement of its components during use. The trimmer head (1) comprises a first shell (3) and a second shell (5), which can be removably coupled to each other by means of a snap-fit connection. To this purpose, said second shell (5) comprises one or more elastic tabs carrying respective fitting elements (25) and said first shell comprises corresponding fitting seats (37, 29) in which said fitting elements engage. According to the invention, said elastic tabs are provided with inwardly facing protuberances (31) protruding inside the inner volume of the casing of the trimmer head (1), and a stop element (7b) is arranged inside said inner volume, which stop element, in normal conditions of use, is axially aligned to said protuberances so as to prevent accidental movement of the elastic tabs (5b) and the respective fitting elements (25) that could cause disengagement of the second shell (5) from the first shell (3).

## Description

### Technical Field of the Invention

The present invention relates to a trimmer head for brush cutters, of the type comprising a nylon line or a similar material for cutting grass.

More particularly, the present invention relates to a particularly reliable trimmer head for brush cutters that prevents accidental disengagement of its components during use.

### Prior Art

It is known to use brush cutters for cutting grass, shrubs, and other vegetation.

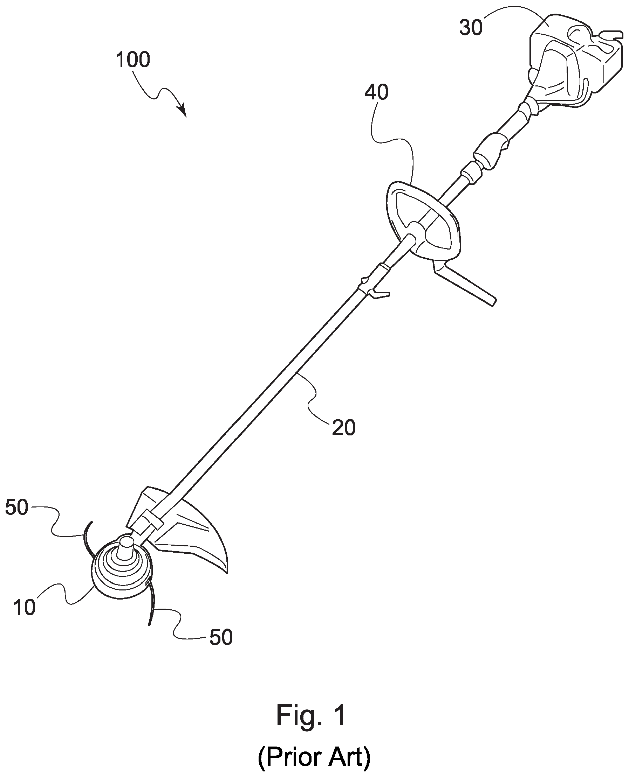

In general, and as also illustrated in Figure 1, a brush cutter 100 comprises a drive shaft 20 that carries, at one end, a motor 30, such as an electric motor or an internal combustion engine, and, at the second, opposite end, a trimmer head 10 rotated by the motor 30. A handle 40 is provided along the shaft 20 so that the operator can move and properly position the brush cutter and, in particular, its trimmer head.

There are currently various types of brush cutter trimmer heads available on the market, which can differ, for example, in the type of cutting elements used, which are generally selected based on the type, size, and toughness of the vegetation to be cut.

In particular, brush cutter trimmer heads are known that use a flexible line made of nylon or a similar material as the cutting element.

In this type of trimmer head, the body of the trimmer head houses a support inside, for example, in the form of a reel, around which a quantity of flexible line is wound to form a coil of flexible line.

One end section, or preferably two opposing end sections 50 of the flexible line coil, protrude(s) from the body by a predetermined length, so as to act as cutting elements when the body rotates.

When the trimmer head 10 is rotated by the motor 30 of the brush cutter 100, the end sections 50 of the line are tensioned due to the centrifugal force generated by the high rotational speed of the trimmer head and act as sharp blades that cut through the vegetation.

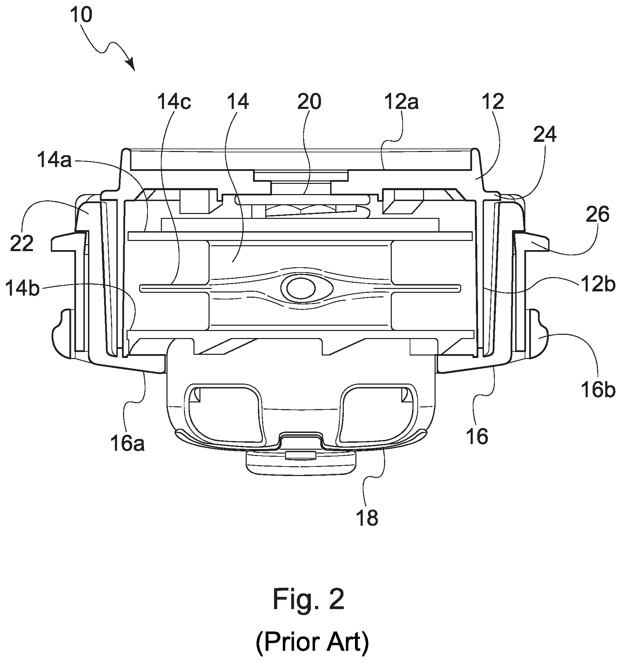

A line trimmer head 10 for a brush cutter 100 of the type described above is schematically shown in cross-section in Figure 2.

Unlike other types of cutting elements, such as metal blades or discs, the flexible line made of nylon or similar material wears out quickly during use of the brush cutter.

For this reason, as mentioned above, the trimmer head 10 comprises a body 12, inside which a support is mounted, for example in the form of a spool 14, around which a large quantity of line can be wound to form a coil.

On the body 12 there are provided two or more eyelets (not visible in Figure 2), through which corresponding end sections 50 of line can be guided to the outside.

For example, in the trimmer head 10 shown in Figure 2, the spool 14 comprises an upper ring 14a, a lower ring 14b, and an intermediate ring 14c that defines an upper portion and a lower portion of said spool: a first portion of line is wound around the upper part of the spool 14, and the corresponding end section extends out of a first eyelet of the body 12; a second portion of line is wound around the lower part of the spool 14, and the corresponding end section extends out of a second eyelet of the body 12, positioned diametrically opposite the first eyelet.

The trimmer head 10 further comprises a lid 16, which, together with the support body 12, forms a closed casing for the spool 14 and the line coil wound around it.

As the protruding end sections of the line wear down, new sections of line are unwound from the line coil around the spool 14 and fed through the eyelets of the body 12.

This operation can be performed manually or automatically.

In those trimmer heads in which said operation needs to be performed manually, it is necessary to stop the rotation of the trimmer head and, while the trimmer head is stationary, disengage the lid from the trimmer head and rotate said lid to take said sections of line out of the respective eyelets.

In the so-called "bump feed heads" like the head of Figure 2, in which such operation is performed automatically, the line coil can be unwound to take sections of line out of the respective eyelets while the head is kept rotating.

To this purpose, the spool 14 is mounted inside the body 12 in an axially movable manner and comprises or is integral with a knob 18 protruding from a corresponding opening formed in the lid 16. Under normal conditions of use, the spool 14, being engaged with the lid 16 and maintained in the engaged state by a spring 20, cannot rotate relative to the body 12. If, while the head is rotating, the user bumps the knob 18 on the ground, they cause the spool 14 to slide axially by overcoming the resistance of the spring 20, and disengage said spool from the lid 16: as a result of the centrifugal force generated on the protruding end sections of the line, the spool 14 rotates by a predetermined angle and further sections of line, becoming unwound from the spool, come out of the respective eyelets.

Although in this type of trimmer heads the lid 16 does not need to be displaced or removed to replace the end sections of the line, it is evident that in this case as well the lid 16 needs to be connected to the body 12 in a removable manner, in order to allow accessing the spool 14 to replace the line coil or in case maintenance is required.

The removable coupling between the body 12 and the lid 16 is usually achieved by using snap-in or bayonet-like means.

As can be seen in Figure 2, the body 12 comprises an upper surface 12a with circular shape, from which at least one outer side wall 12c and preferably, in order to obtain a more robust component, two concentrical, cylindrical, side walls, namely an inner side wall 12b and an outer side wall 12c, extend(s).

The lid 16 comprises a lower surface 16a with circular shape, from which two flexible arms or tabs 16b extend, which are designed to be inserted the gap between the side walls 12b, 12c of the body 12.

Each tab 16b carries, at its distal end, a fitting element 22 protruding through a corresponding window 24 which is provided in the outer side wall 12c of the body 12 and serves as a fitting seat. At the lower edge of the window 24, said outer side wall 12c has an outwardly turned edge 26, against which the fitting element 22 abuts, thereby locking the lid 16 to the body 12.

In order to remove the lid 16 from the body 12 it is necessary to simultaneously press the fitting elements inwards, so as to disengage them from the respective outwardly turned edges 26 of the outer side wall 12c of the body 12 and push them into the gap between the side walls 12b, 12c of the body 12: in this configuration it is possible to slide the lid 16 axially off the body 12, so as to access the spool 14.

Clearly, in embodiments alternative to the one shown in Figure 2, it would also be possible to include fitting elements on the body 12 and fitting seats on the lid 16, without substantially altering the operation of the trimmer head.

The removable coupling between the lid and the body of the trimmer head by using snap-in or bayonet-like means, even though it is simple and easy to use, poses a significant drawback in current trimmer heads.

In fact, it should be noted that, while the brush cutter is in operation, the trimmer head is subject to frequent impacts against obstacles such as branches, logs, rocks, sidewalks, and so on, and such impacts can cause the fitting elements to move accidentally inward, this resulting in disengagement of said fitting elements from their fitting seats and, ultimately, in the accidental separation of the lid from the trimmer head body during rotation of the trimmer head.

Given the high rotational speed of the head, accidental opening of the trimmer head can cause damage, as its components, due to centrifugal force, can violently strike the user, or other people in the vicinity, or even fragile structures such as glass panels, doors, and/or windows, etc.

It can also happen that, again due to centrifugal force, some parts of the trimmer head are flung away and get lost in tall grass or bushes, making it impossible to reassemble and use the trimmer head.

In the past, various solutions have been developed to prevent brush cutter trimmer heads from opening accidentally due to accidental impacts while the brush cutter is in operation.

However, these solutions generally result in an increase in the complexity of the structure of the trimmer head itself and the number of its components, which raises production costs and reduces the durability and reliability of the trimmer head.

In light of the above, there is a need for a brush cutter trimmer head that does not suffer from the drawbacks of prior art.

The main object of the present invention is therefore to provide a line trimmer head for brush cutters in which the risk of the trimmer head opening unintentionally as a result of accidental impacts during operation is eliminated or at least reduced.

Another object of the invention is to provide a line trimmer head having a simple and compact structure and a limited number of components.

These and other objects are achieved with the line trimmer head for brush cutters as claimed in the appended claims.

### Summary of the Invention

The present invention relates to a trimmer head for brush cutters as disclosed and characterized in the independent claim. The dependent claims disclose other preferred and non-essential features of the present invention.

In a manner known per se, the line trimmer head mainly comprises a pair of shells, which can be coupled to each other in a removable manner and, once assembled, define a closed casing in which a support in the form of a spool for a flexible cutting line is received.

A first shell (or body) comprises a circular surface and at least one outer cylindrical side wall extending in a direction substantially perpendicular to said circular surface, and a second shell (or lid) comprises a circular surface and one or more flexible arms or tabs extending in a direction substantially perpendicular to said circular surface and are designed to be inserted in said outer cylindrical side wall.

In a preferred embodiment of the invention, in order to obtain a more robust component, the first shell further comprises an inner cylindrical side wall located within the outer cylindrical side wall and substantially concentric therewith. In this embodiment, the flexible arms or tabs of the second shell are designed to be inserted in the gap between the side walls of the first shell.

In a preferred tough not exclusive embodiment of the invention, the first shell is the upper shell, namely the shell designed to be connected to the end of the transmission shaft of the brush cutter, and the second shell is the lower shell, namely the shell which, in use, faces the ground.

The first and second shells are coupled to each other in a removable manner by snap-in coupling. For this purpose, each tab of the second shell carries at its distal end, on its outward facing face, a fitting element designed to be inserted in a fitting seat formed in the outer side wall of the first shell. In order to remove the second shell from the first shell, each fitting element is to be pressed inward until it is disengaged from the respective fitting seat.

According to the invention, in order to prevent accidental decoupling of a fitting element from the respective fitting seat, each tab is provided, on its inner wall, with a protuberance which protrudes inside the inner volume of the casing defined by the two shells.

In the inner volume of said casing there is provided a stop element which, under normal conditions of use, is aligned to the protuberance of each tab of the second shell and is sized so that said protuberance is substantially in contact with said stop element. Thanks to the interaction between the protuberances of the tabs and the stop element, under normal conditions of use, the tabs of the second shell, even if subjected to impacts or stresses, cannot be displaced inward and accidental disengagement of a fitting element from the respective fitting seat is effectively prevented.

For the second shell to be able to be removed from the first shell, the stop element is provided axially moveable, whereby it can be brought from the normal operating position, in which it is aligned to the protuberances of the tabs of the second shell, to an unlocked configuration, in which it is brought out of alignment with said protuberances.

Once the stop element is no longer aligned to the inward protruding protuberance, each tab can be bent inward and the fitting element can thus be disengaged from the respective fitting seat, thereby allowing the tab to slide axially along the inner surface of the outer side wall of the first shell until the second shell is entirely released from the first shell.

In the preferred embodiment of the invention, in which the first shell further comprises an inner side wall and in which the tabs of the second shell are received in the gap between the two side walls of the first shell, in order to allow the protuberances of said tabs to protrude inside the inner volume of the casing defined by the two shells, the inner side wall of the first shell comprises, at each tab, a corresponding slot, through which the protuberance of the tab extends.

In this embodiment, when the stop element is no longer aligned to the protuberances of the tabs and said tabs can be bent inward, the protuberances can slide along the respective slots of the inner side wall of the first shell, the tabs being thereby allowed to slide axially in the gap between the side walls of the first shell to remove the second shell from the first shell.

In general, the stop element could be a dedicated component that moves axially within the casing defined by the shells of the trimmer head.

However, in order to limit the number of components of the trimmer head, the stop element is advantageously integrated in the spool of the trimmer head.

In particular, according to a preferred embodiment of the invention, the spool comprises a cylindrical core, around which the flexible line is wound, and an upper ring and a lower ring located near opposite ends of said cylindrical core, and one of said rings is used as a stop element.

In preferred embodiments of the invention, the line trimmer head according to the invention is a trimmer head of the "bump feed" type.

In these embodiments it is particularly advantageous for the stop element to be integrated in the spool (for example, one of the rings of the spool is used as stop element), because the spool is per se designed to be axially movable, simply by bumping the knob of the spool itself onto the ground or other surface.

In other embodiments of the invention, the line trimmer head according to the invention is a trimmer head of the manual type.

It should be noted that, thanks to the invention, it would be possible to provide a single tab in the second shell, and thus a single fitting element, as the configuration according to the invention would anyway prevent accidental disengagement of the two shells of the trimmer head from each other.

However, for greater security, the second shell preferably comprises a number of tabs (for example, two tabs), each provided with a corresponding protrusion on its inwardly facing wall.

### Brief Description of the Drawings

Further features and advantages of the present invention will become more evident from the following detailed description of a preferred embodiment of the invention, given by way of non-limiting example, with reference to the annexed drawings, in which:
- Figure 1 schematically shows a brush cutter;
- Figure 2 schematically shows a cross-section of a line trimmer head of known type for a brush cutter;
- Figure 3 is a perspective view of a line trimmer head according to the invention;
- Figure 4 is an exploded perspective view of the trimmer head of Figure 3;
- Figure 5 is a perspective view of the first shell of the trimmer head of Figure 3;
- Figure 6 is a perspective view of the second shell of the trimmer head of Figure 3;
- Figure 7 is a cross-sectional view of the trimmer head of Figure 3, shown in a normal operating configuration;
- Figure 8 is a cross-sectional view of the trimmer head of Figure 3, shown in a configuration in which the two shells are disengaged from each other.

### Detailed Description of Some Preferred Embodiments of the Invention

In the preferred embodiment that will be described below, reference will be made to the application of the invention to a so-called "bump feed" trimmer head.

However, this application should not be construed as limiting, and the invention could also be applied to a line trimmer head for manual brush cutters, provided that it incorporates all the essential elements of the invention as defined in the independent claim.

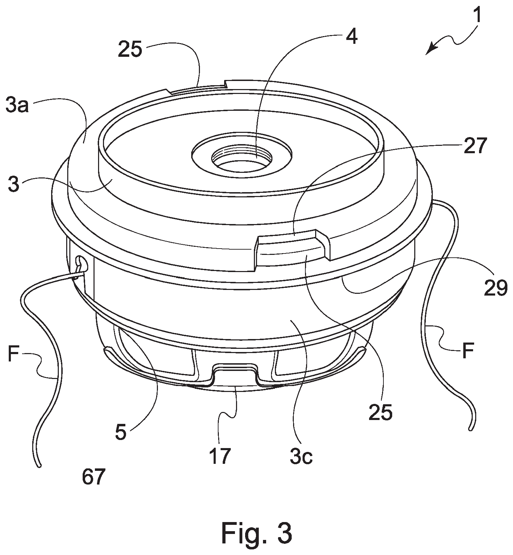

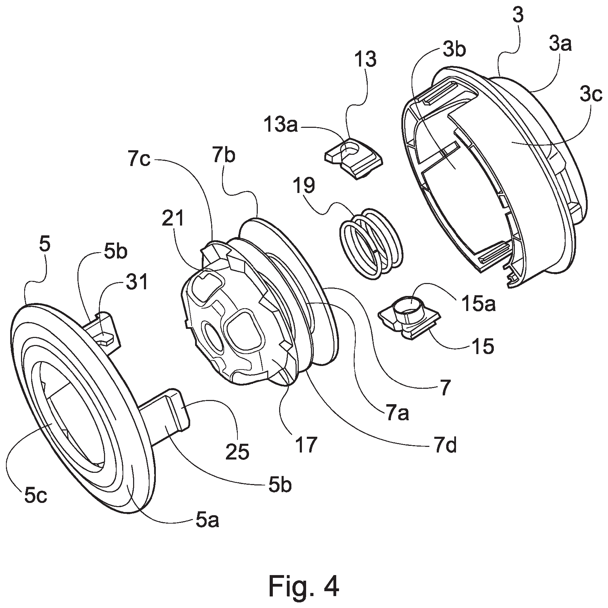

Figures 3 - 8 show a line trimmer head for brush cutters, said line trimmer head being indicated as a whole by reference numeral 1.

The trimmer head 1 comprises a first shell 3 and a second shell 5 that are removably coupled to each other and, once coupled, form a substantially closed casing having a substantially cylindrical shape.

In the shown embodiment, the first shell 3 is the upper shell of the trimmer head 1, i.e, the shell intended to be connected to the end of the shaft of the brush cutter, and the second shell 5 is the lower shell of the trimmer head 1, i.e., the shell that, in use, faces the ground.

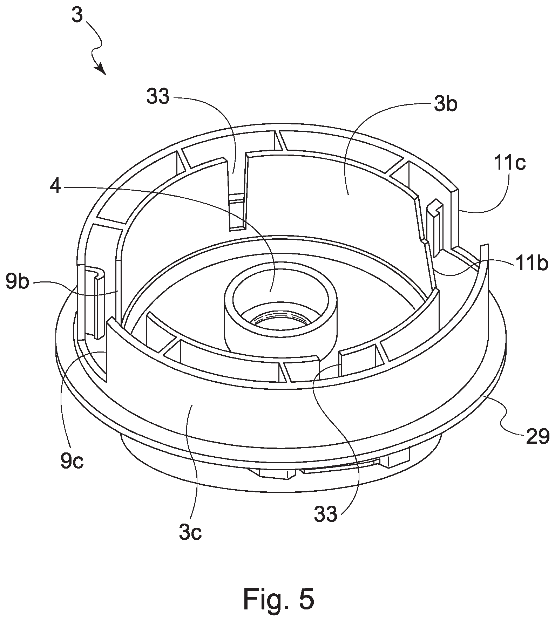

Referring also to Figure 5, the first shell 3 has a base 3a with a substantially circular shape and at least one outer side wall 3c extending from said base 3a in a substantially perpendicular direction.

In the shown example, said first shell further comprises an inner side wall 3b, which also extends from said base 3a in a substantially perpendicular direction, so that said side walls 3b, 3c define a gap between them.

In the shown embodiment, the side walls 3b, 3c are cylindrical and substantially concentric to each other.

In the shown embodiment, in which the first shell is the upper shell, the base 3a of the first shell 3 has coupling means 4, for example of the screw-type, for coupling to the drive shaft of a brush cutter.

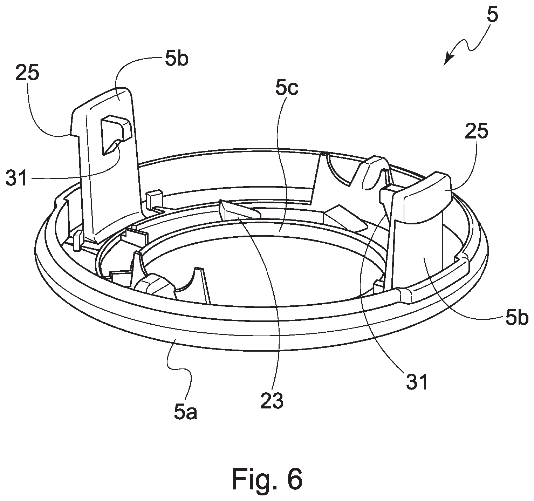

Referring also to Figure 6, the second shell 5 has a base 5a with a substantially circular shape and one or more elastic arms or tabs 5b extending from the base 5a in a substantially perpendicular direction.

In the shown embodiment, the second shell comprises two tabs 5b positioned diametrically opposite each other.

However, it will be apparent to the person skilled in the art that the second shell could comprise a different number of tabs, in particular a single tab or more than two tabs. In the latter case, the tabs will preferably be evenly distributed along the base 5a of the second shell 5.

When the first and second shells are coupled together, the tabs 5b of the second shell 5 are inserted in the gap between the side walls 3b, 3c of the first shell 3, and the base 5a of the second shell 5 acts as a lid for said side walls 3b, 3c of the first shell 3.

In particular, the first shell 3 and the second shell 5 are removably coupled to each other by means of a snap-fit connection, which will be described in detail below.

In the inner volume of the casing defined by the shells 3, 5 there is arranged a spool 7 comprising a cylindrical core 7a, which is arranged with its longitudinal axis substantially aligned to the longitudinal axis of said casing and around which a coil of flexible cutting line F can be wound.

In the embodiment shown in the Figures, the spool has a first ring or upper ring 7b and a second ring or lower ring 7c that are arranged near opposite ends of the core 7a.

The side walls 3b, 3c of the first shell 3 have one or more pairs of mutually aligned outlet openings for the exit of respective end sections of cutting line F.

In the shown embodiment, the side walls 3b, 3c of the first shell 3 have a first pair of mutually aligned outlet openings 9b, 9c for a first end section of the cutting line F and a second pair of mutually aligned outlet openings 11b, 11c, diametrically opposite the first pair of outlet openings 9a, 9b, for a second end section of the cutting line F.

The shells 3, 5 of the trimmer head 1 are usually made of plastic material.

To limit wear caused by the cutting line rubbing against the walls of the outlet openings, inserts 13, 15 made from a more durable material, for example, metal, and provided with a through hole 13a, 15a are preferably inserted in the first pair of outlet openings 9b, 9c and the second pair of outlet openings 11b, 11c, respectively, and the end sections of the cutting line F are passed through said through holes 13a, 15a. More in detail, the spool 7 has, in addition to the upper ring 7b and the lowering 7c, a third ring or intermediate ring 7d arranged at a middle region of the cylindrical core 7a of the spool 7.

The intermediate ring 7d defines, together with the upper ring 7b, an upper part of the spool core around which a first portion of the coil of cutting line F can be wound, whose end section is passed through the through hole 13a of the insert 13 located at the first pair of outlet openings 9b, 9c of the first shell 3; the intermediate ring 7d then defines, together with the lower ring 7c, a lower part of the spool core around which a second portion of the coil of cutting line F can be wound, whose end section is passed through the through hole 15a of the insert 15 located at the second pair of outlet openings 11b, 11c of the first shell 3.

In the shown embodiment, the spool 7 comprises or is integrally attached to a knob 17 protruding axially beyond the lower ring 7c.

When the spool is mounted in the casing of the trimmer head 1, a spring 19 biases the spool downward, so that the lower ring 7c of the spool is kept in abutment against the base 5a of the second shell 5 and the knob 17 protrudes downward from said base 5a of said second shell 5 through an opening formed therein.

The lower surface of the lower ring 7c is provided with first engagement teeth 21 cooperating with second engagement teeth 23 provided on the internal face of the base 5a of said second shell 5 to make the spool rotationally integral with the second shell 5 (and thus also with the first shell 3) of the trimmer head 1 when the lower ring 7c of the spool is kept in abutment against the base 5a of the second shell 5 by the spring 19. In a manner known per se, to unwind portions of cutting line F from the spool 7 it is necessary to apply pressure onto the knob 17, for example by bumping said knob onto the ground.

Thanks to such pressure, overcoming the resistance of the spring 19, it is possible to cause the spool 7 to translate axially, thereby disengaging the first engagement teeth 21 from the second engagement teeth 23 and thus allowing the spool 7 to rotate relative to the first and second shell 3, 5.

As mentioned above, the first shell 3 and the second shell 5 of the trimmer head 1 are removably coupled to each other by means of a snap-fit connection.

To this purpose, and referring in particular to Figures 5 and 6, each tab 5b of the second shell 5 is inserted in the gap between the side walls 3b, 3c of the first shell and carries, at its distal end, on its outwardly facing face, a fitting element 25 protruding through a corresponding window 27 that is formed in the outer side wall 3b of the first shell and acts as a fitting seat for the fitting element 25.

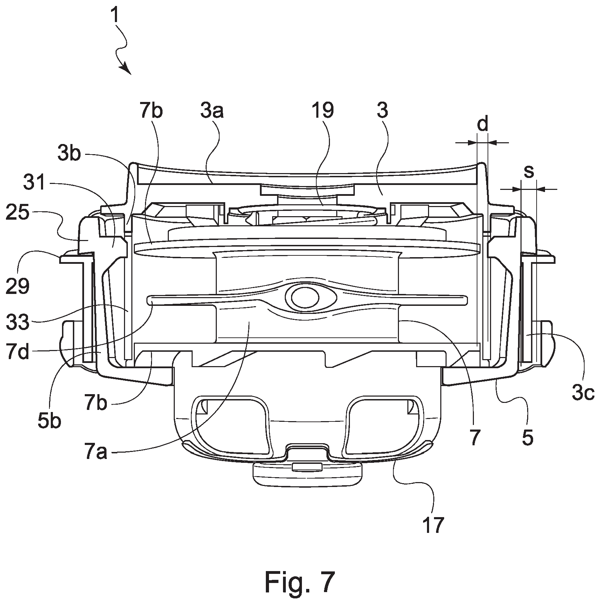

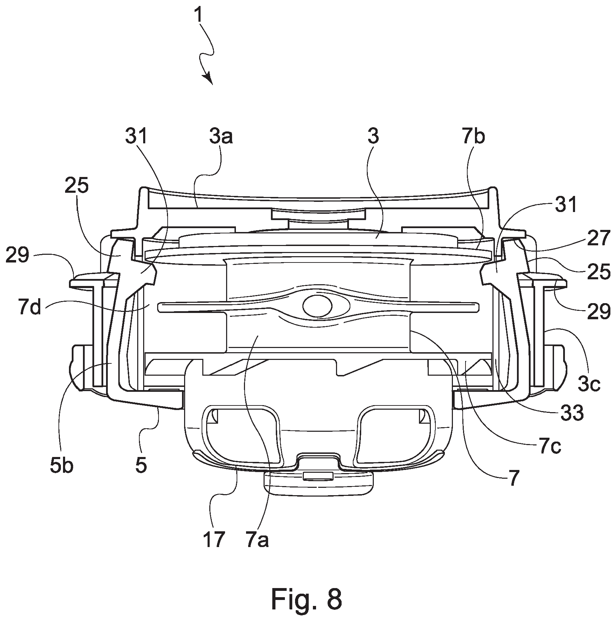

At the lower edge of the window 27, the outer side wall has an outwardly bent edge 29 (better visible in Figures 7 and 8) acting as a stop element for the fitting element 25: the lower face of the fitting element 25 comes into abutment against the outwardly bent edge 29, thereby preventing movement in the axial direction, which would tend to move the second shell 5 away from the first shell 3 (and thus cause opening of the casing of the trimmer head 1).

When the user wishes to separate the shells 3, 5 from each other to access the spool 7 (for example to replace the coil of cutting line F), they must push the fitting elements 25 inwards simultaneously, thereby causing the tabs 5b to bend, until the fitting elements 25 disengage from their respective fitting seats and the tabs 5b can slide axially along the gap between the side walls 3b, 3c of the first shell 3.

According to the invention, in order to prevent the fitting elements 25 from accidentally disengaging from their respective fitting seats, each tab 5b of the second shell 5 comprises, on its inwardly facing face, a protuberance 31 which passes through a slot 33 correspondingly formed in the inner side wall 3b of the first shell and protrudes in the inner volume of the casing of the trimmer head 1.

Preferably, said protuberances 31 are provided near the distal end of the tabs 5b, where the displacement of these tabs in response to a load is maximum.

As can be seen in Figure 7, the protuberances 31 are located in such a way that, during normal operation of the trimmer head 1, they are aligned to the upper ring 7b of the spool 7 and are sized so that they are substantially in contact with the edge of said upper ring 7b.

More precisely, the distance d between the protuberances 31 and the edge of the upper ring 7b of the spool 7 is smaller than the length in the radial direction s of the contact surface between the lower face of the fitting elements 25 and the edge 29 of the fitting seat.

Thanks to the cooperation between the protuberances 31 and the upper ring 7b of the spool 7, a movement of the tabs 5b and the fitting elements 25 inwards - more precisely a movement of the tabs 5b inwards enough to disengage the fitting elements 25 from the respective fitting seats - is entirely prevented, even if a load is accidentally applied to these coupling elements (for example, as a result of an impact). To separate the shells 3, 5 from the trimmer head 1, it is necessary to move the upper ring 7b of the spool 7 out of alignment with the protuberances 31 of the tabs 5b by means of an axial displacement of the spool itself.

In the shown embodiment, in which the spool 7 is axially movable per se to allow unwinding of the cutting line F, such axial displacement can be achieved simply by applying pressure to the knob 17.

Figure 8 shows the condition in which a pressure has been applied to the knob 17 and the spool 7 (overcoming the resistance of the spring 19) has been translated axially upwards.

In this condition, the upper ring 7b of the spool 7 is no longer axially aligned to the protuberances 31 of the tabs 5b.

Therefore, by applying pressure to the fitting elements 25, they can be pushed inwards, while the protuberances 31 pass freely through the slots 33 of the inner side wall 3b of the first shell 3, until said fitting elements are completely disengaged from the respective fitting seats.

In this condition, the tabs 5b of the second shell 5 can freely slide along the gap between the side walls 3b, 3c of the first shell 3, and the second shell 5 can thus be moved away from the first shell 3.

It will be apparent that, although in the illustrated embodiment the protuberances 31 of the tabs 5b of the second shell 5b cooperate with the upper ring 7b of the spool 7, it would also be possible to provide a dedicated stop element.

In this case, the protuberances 31 would be aligned to said dedicated stop element in the axial direction during normal operation of the trimmer head.

Such dedicated stop element could, in any case, be integral with the spool 7 and move axially therewith when pressure is applied to the knob 17.

It would also be possible to design this dedicated stop element to be manufactured separately from the spool 7 and axially movable independently thereof.

In this case, the trimmer head 1 would comprise a separate actuator to control the axial displacement of said stop element.

However, it will be apparent that using the upper ring 7b of the spool 7 as a stop element for the protuberances 31 makes it possible to utilize the existing components of the trimmer head without the need to introduce additional elements, thereby minimizing the total number of components in the trimmer head according to the invention.

It is understood that the embodiment described above should in no way be construed in a limiting sense, and that numerous modifications and variations within the scope of a person skilled in the art may be conceived and implemented without thereby departing from the scope of the invention as fined by the appended claims.

In particular, although the embodiment described above refers to a trimmer head of the so-called "bump feed" type, the invention can equally be applied to other types of line trimmer heads for brush cutters, and particularly to the so-called "manual" trimmer heads.

It will be sufficient to provide, inside the casing of the trimmer head, a stop element (either integral or non-integral with the spool of the trimmer head) that can move axially between a position in which it is aligned to the protuberances of the tabs of the second shell and prevents them from moving inwards, ad a position in which it is moved out of alignment with said protuberances and lets the tabs of the second shell free to be bent inwards.

## Claims

1. Line trimmer head (1) for brush cutters, comprising:
- a first shell (3) and a second shell (5) removably coupled to each other to provide a substantially closed casing;
- a spool (7) received inside said casing formed by said first and second shells (3, 5); wherein said first shell (3) comprises a base (3a) and at least one outer side wall (3c) extending in a direction substantially perpendicular to said base (3a),
wherein said second shell (5) comprises a base (5a) and one or more elastic tabs (5b), each elastic tab (5b) extending in a direction substantially perpendicular to said base (5a) and carrying at its distal end, on its outward facing face, a fitting element (25),
wherein, when said first and said second shells (3, 5) are coupled to each other, each elastic tab (5b) of said second shell extends along the internal surface of said outer side wall (3c) of said first shell (3), said fitting element protrudes through a window (27) correspondingly formed in said outer side wall (3c) of said first shell and abuts against an outwardly bent edge (29) of said window,
**characterized in that** each elastic tab (5b) of said second shell has, on its inwardly facing face, a protuberance (31) which protrudes inside said casing defined by said first and said second shells (3, 5), and **in that** a stop element (7b) is arranged inside said casing defined by said first and said second shells (3, 5), which stop element can be translated in an axial direction between a first position, in which it is axially aligned to said protuberances (31) of said elastic tabs (5b), and a second position, in which it is axially offset with respect to said protuberances (31) of said elastic tabs (5b), said protuberances (31) of said elastic tabs (5b) and said stop element (7b) being sized in such a way that said protuberances (31) of said elastic tabs (5b) are substantially in contact with said stop element (7b) when said stop element is in said first position, whereby any inwardly movement of said elastic tabs (5b) and of the respective fitting elements is substantially prevented.

2. Line trimmer head (1) according to claim 1, wherein when said first and said second shells (3, 5) are coupled to each other, each fitting element (25) abuts against said outwardly bent edge (29) of said window (27) along a respective contact surface, and wherein when said stop element is in said first position, said protuberances (31) of said elastic tabs (5b) are at a distance (d) from the peripheral edge of said stop element (7b) which is lower than the extension (s) of said contact surface in the radial direction.

3. Line trimmer head (1) according to claim 1 or 2, wherein said first shell further comprises an inner side wall (3b), forming a gap with said outer side wall (3c), wherein when said first and said second shells (3, 5) are coupled to each other, each elastic tab (5b) of said second shell extends inside said gap between said side walls (3b, 3c) of said first shell, and wherein said inner side wall (3b) of said first shell comprises, at each protuberance (31), a slot through which said protuberance passes to protrude inside said casing defined by said first and said second shells (3, 5) and along which said protuberance can slide when said second shell is moved away from said first shell.

4. Line trimmer head (1) according to claim 1 or 2 or 3, wherein said spool (7) is axially movable relative to said casing defined by said first and said second shells (3, 5), and wherein said stop element (7b) is integral with said spool.

5. Line trimmer head (1) according to claim 4, wherein said spool (7) comprises a cylindrical core (7a) around which a coil of flexible cutting line (F) can be wound, and a first ring or upper ring (7b) and a second ring or lower ring (7c) which are arranged at or near opposite ends of said cylindrical core and extend radially therefrom, and wherein one (7b) of said first and said second rings is said stop element.

6. Line trimmer head (1) according to claim 5, wherein said spool (7) comprises or is integral with a knob (17) which extends below said second ring (7c) and protrudes from said casing defined by said first and said second shells (3, 5) through an opening (5c) formed in said base (5a) of said second shell (5), and wherein said first ring (7b) is said stop element.

7. Line trimmer head (1) according to claim 1 or 2 or 3, wherein said stop element is separate from said spool and is axially movable relative to said casing defined by said first and said second shells (3, 5) independently of said spool.

8. Line trimmer head (1) according to any of claims 1 - 7, wherein said second shell (5) comprises a single elastic tab (5b).

9. Line trimmer head (1) according to any of claims 1 - 7, wherein said second shell (5) comprises two elastic tabs (5b), arranged at diametrically opposed positions of said base (5a).

10. Brush cutter (100) comprising a line trimmer head (1) according to any of claims 1 to 9.
